# EUROPEAN PATENT SPECIFICATION

(11) **EP 1 978 288 B1**
(45) Date of publication and mention of the grant of the patent: **13.11.2013**
(21) Application number: 08075239.7
(22) Date of filing: 27.03.2008
(51) Int. Cl.: F16L 3/10, F16B 37/08

(54) **Pipe clip with rapid closure**
Rohrklemme mit Schnellverschluss
Fixation de tuyau à fermeture rapide

(30) Priority: 06.04.2007 NL 1033654
(43) Date of publication of application: 08.10.2008
(73) Proprietor: J. van Walraven Holding B.V., 3641 RK Mijdrecht (NL)
(72) Inventor: Van Walraven, Jan, 3641 GP Mijdrecht (NL)
(74) Representative: Houben, Christiaan Hein Willem Frans

(56) References cited:
- DE-U1- 29 706 912
- US-A- 3 261 580

## Description

The present invention relates to a pipe clip according to the preamble of claim 1.

A fastening element of this type is known.

From EP 1 022 502 a pipe clip having a spring nut is known, wherein the tightening screw is inserted into a spring nut supported on a flange on the second end of the clip body, whilst the head of the tightening screw can engage behind lips of a flange on the first clip end. The spring nut is formed from spring steel and is substantially annular. On one side, the spring nut is split and on each of the ends which come together there half of a screw thread collar is fitted. The screw thread collar has a plurality of windings of an internal screw thread, through which the shank of the tightening screw can be forced. On each half of the screw thread collar, an operating lip is fitted, which extends outwards from the screw thread collar. This known spring nut is shaped such that, in the tightening operation, pressure is applied with a finger to the tightening element, whilst at the same time two other fingers press on the operating lips, so that the halves of the screw thread collar are spread apart and the tightening element can pass alongside them. The compressive force which is required upon the tightening screw is limited thereby.

DE 297 06 912 U1 discloses a pipe clip with two flanges. One flange is provided with a slot that is open on one end so as to allow the transverse introduction of a shank of a screw. On the other flange a support part is arranged. The support part has two legs. One of the legs is provided with a threaded hole or has a nut attached to it. The other leg is also provided with a hole. A screw extends with its shank through the holes in the respective legs and through a cut-out in the flange, thereby fixing the support part to the flange. The cutout in the flange and the support part are configured and arranged such that the screw is allowed to swivel with the support part such that it can swivel with its shank into the open slot in the other flange.

The object of the invention is to provide a pipe clip having an alternative tightening construction.

This object is achieved according to the invention by a pipe clip according to claim 1.

In the pipe clip according to the invention, the pass-through openings in the base plate and in the clamping plate are brought into line by moving the clamping plate and by feeding the shank of the tightening element through the pass-through openings. By then releasing the clamping plate, this is moved back by the spring force of the resilient hinged part until the rim of the pass-through opening acts upon the shank of the tightening element. The shank is then clamped between the rims of the pass-through openings. In order to release the tightening element, the pass-through openings in the base plate and in the clamping plate are brought into line by moving the clamping plate and then withdrawing the shank.

Preferably, the female fastening element comprises two parallel clamping plates, which are each connected to the base plate by means of a resilient hinged part and are movable in opposite direction counter to the spring force of the respective resilient hinged parts. In this preferred embodiment, the pass-through openings in the base plate and in the clamping plates are brought into line by displacing the clamping plates in the opposite direction parallel to each other and feeding the shank of the tightening element through the pass-through openings. By then releasing the clamping plates, these are each moved back by the spring force of the associated resilient hinged part, until the rim of the particular pass-through opening acts upon the shank of the tightening element. The shank is then clamped at least between the rims of the pass-through openings in the clamping plates. This embodiment has the advantage that the shank of the tightening element is loaded from two sides in the transverse direction by substantially the same spring force, whereby the resultant transverse load upon the shank is approximately nil and the shank is not pulled out of alignment.

In a further preferred embodiment, the pass-through opening in the clamping plate is substantially drip-shaped, the narrower part of the drip shape preferably being directed away from the direction of the spring force. In this embodiment, the tapering part of the pass-through opening is drawn against the shank of the tightening element by the spring force of the hinged part accompanying the particular clamping plate, whereby a better clamping effect is procured. This drip shape is also advantageous when the tightening element is removed again.

According to the invention, an embodiment is provided, wherein the pass-through opening in the clamping plate is shaped such that, when the shank of the tightening element is inserted, the axial force upon the tightening element is already sufficient to cause displacement of the clamping plate(s), so that the shank can pass through. In order to be able to withdraw the shank when the pipe clip is released, the clamping plates must be moved by a fitter counter to the spring force, so that the pass-through openings are aligned such that the shank can comfortably pass through.

The invention will be described in greater detail in the following description with reference to the drawing, wherein:
Fig. 1 shows a perspective view of an embodiment of a pipe clip according to the invention in an open state,
Fig. 2 shows a perspective view of the pipe clip of Fig. 1 in a closed state,
Fig. 3 shows a perspective view of the pipe clip of Fig. 1 as it is released
Fig. 4 shows a perspective view of a female fastening element associated with the pipe clip of Fig. 1,
Fig. 5 shows a top view of the female fastening element of Fig. 4,
Fig. 6 shows a side view of the female fastening element of Fig. 4,
Fig. 7 shows a bottom view of the female fastening element of Fig. 4,
Fig. 8 shows a top view of the female fastening element of Fig. 4 in an unfolded state,
Fig. 9 shows a side view of a tightening element of the pipe clip of Fig. 1,
Figs. 10a and 10b show two possible alternative tightening elements,
Fig. 11 shows a top view of an alternative embodiment of a female fastening element, and
Fig. 12 shows a side view of the female fastening element of Fig. 11.

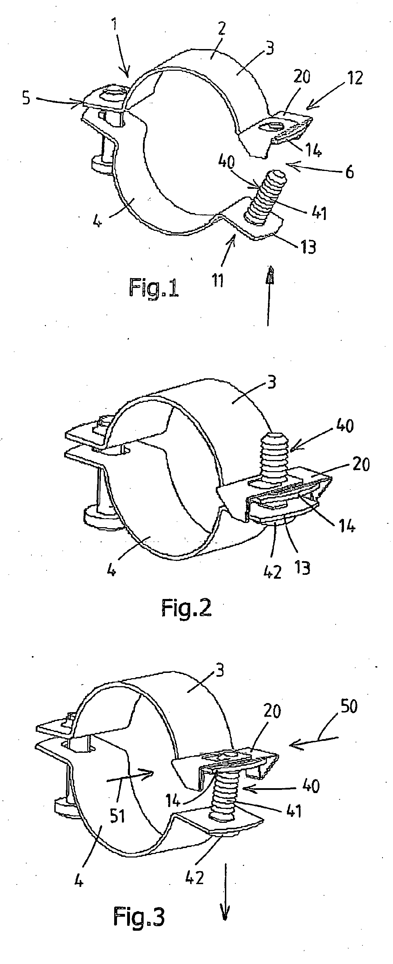

In Figs. 1-3 a pipe clip 1 is shown, having a clip body 2 comprising two clip halves 3 and 4, which are articulately connected to each other by means of hinge means 5. The clip body 2 has a first end 11 and a second end 12, which delimit an opening 6 for the fitting of the pipe clip 1 around a pipe (not shown). The opening 6 can be enlarged or reduced by articulating the clip halves 3 and 4 away from each other or articulating them towards each other. At the first end 11, a first flange 13 is formed on, and at the second end 12 a second flange 14 is formed on. The first flange 13 and the second flange 14 are provided with an opening for the introduction of a tightening element 40 provided with a shank 41 and a head 42.

In the mounting operation, the shank 41 of the tightening element 40 is fed from the side of the first flange 13 which is facing away from the second flange 14 through the opening in the first flange 13 and then through the opening in the second flange 14. The head 42 of the tightening element 40 is thus located on the side of the first flange 13 which is facing away from the second flange 14. To the second end 12 of the clip body 2 there is fitted a female fastening element 20, through which the shank 41 of the tightening element 40 can be fed in order to secure this and keep the clip 1 closed.

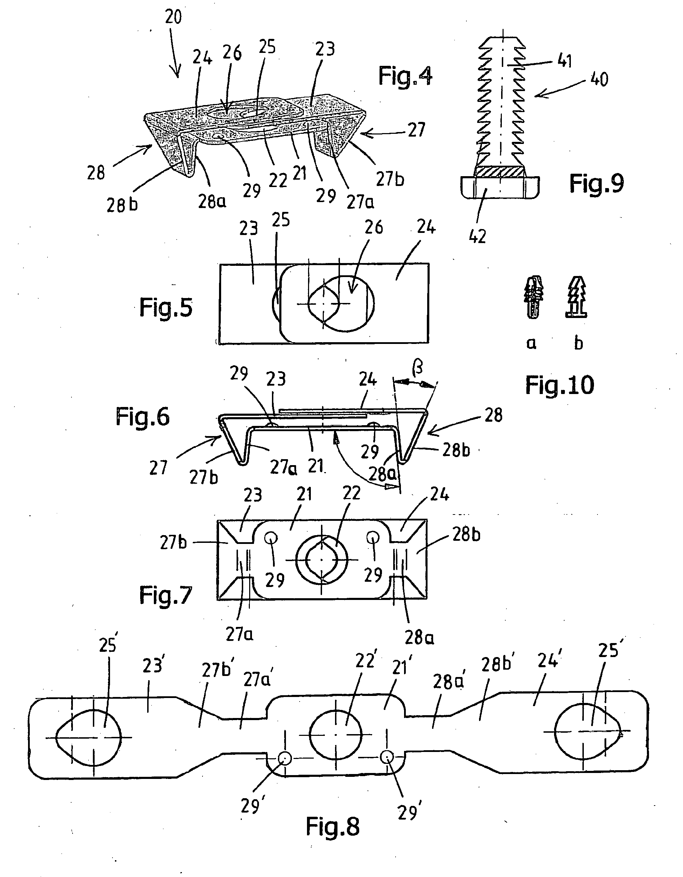

The female fastening element 20 is shown in greater detail in Figs. 4-7. The female fastening element 20 comprises a base plate 21 having a pass-through opening 22 for the shank 41. The fastening element 20 further comprises two clamping plates 23 and 24 extending parallel to each other and parallel to the base plate. The clamping plates 23 and 24 partially overlap each other in a region above the pass-through opening 22 in the base plate 21 and in the overlap region preferably bear one against the other.

In the clamping plate 23, a pass-through opening 25 for the shank 41 is provided, in the other clamping plate 24 a pass-through opening 26 for the shank 41 is provided. In the embodiment shown, the pass-through openings 25 and 26 are substantially drip-shaped. A different suitable shape is also conceivable. In an unloaded state,-the pass-through openings 25 and 26 partially overlap each other, as can best be seen in Fig. 5.

The clamping plates 23 and 24 are connected to the base plate 21 by means of a resilient hinged part 27 and 28. In the embodiment shown in Figs. 4-7, the hinged part 27 or 28 comprises a first leg 27a or 28a, which is connected to the base element 21, and a second leg 27b or 28b, which is connected to the clamping plates 23 and 24. The base plate is preferably somewhat wider than the flange 14, the first leg 27a or 28a preferably standing at an angle α (see Fig. 6) of 90°-100° relative to the base plate. In the specific embodiment shown in the figures, the angle α between the legs measures approximately 95° relative to the base plate 21. Although this is not preferable at this moment, if the width of the base plate 21 sufficiently exceeds the width of the flange 14, there is also the possibility of choosing the angle α less than 90°, for example 80°. The first leg 27a or 28a and the second leg 27b or 28b enclose an angle β (see Fig. 6), which in the specific embodiment shown is acute and measures approximately 27°. The angles α and β can also be other than shown in the specific illustrative embodiment, without deviating from the inventive concept. All that is important is that a suitable resilient effect is obtained to bring the pass-through openings 22, 25, 26 into mutual alignment, so that the shank 41 of the tightening element 40 can pass through them.

Moreover, this resilient effect of the hinged part can also be achieved in many other ways instead of that construction of the resilient hinged part, having mutually angled legs, which is specifically shown here, and these other conceivable embodiments are also deemed to fall within the scope of the invention.

The female fastening element 20 is preferably made of metal from one piece. Preferably, the fastening element 20 is made of spring steel by punching or cutting and bending. In Fig. 8, the female fastening element 20 is shown in the unfolded state, the component parts being indicated with the same reference numerals as in the description above, provided with an accent sign. From this figure, it can be seen that the second leg 27b', 28b' tapers from the clamping plate 23', 24' in the direction of the first leg 27a', 28a'.

It is also conceivable for the female fastening element to be made of a different metal, of plastic, or of a combination of metal and plastic.

As has already been stated above, the female fastening element is fitted to the flange 14 on the second end 12 of the pipe clip body 2. The flange 14 has a pass-through opening for the shank 41 of the tightening element 40. The base plate 21 of the female fastening element 20 is fitted to the side of the flange 14 facing towards the first end 11 of the clip body 2 and bears against this side of the flange 14. The clamping plates 23, 24 are fitted to the other side of the flange 14. An embodiment is also conceivable, moreover, in which the base plate 21 of the female fastening element 20 is fitted to the side of the flange 14 facing away from the first end 11 of the clip body 2, and the clamping plates 23, 24 are fitted to the side of the flange 14 facing towards the first end 11. The resilient hinged parts 27 and 28, which connect the base plate 21 to the respective clamping plates 23, 24, extend along the mutually opposing side edges of the flange 14. The distance between the clamping plate 23 situated closest to the flange 14 and the base plate 21 approximately conforms to the thickness of the flange 14. In order to prevent the fastening element 20 from possibly being pushed off the flange 14, the base plate 21 is provided with one or more, in the illustrated example two bulges 29, and the flange 14 is provided with one or more, in the illustrated example two, preferably complementary recesses, for example indentations or holes in which the bulges are received.

In an unloaded state, the pass-through openings 22, 25 and 26 in the base plate 21 and the clamping plates 23 and 24 partially overlap one another, as can best be seen in Fig. 5 and Fig. 7. By pressing of the legs 27b and 28b inwards counter to the spring force of the resilient hinged parts 27, 28, as is illustrated in Fig. 3 with the arrows 50 and 51, the clamping plates 23 and 24 are displaced relative to each other and relative to the base plate 21, whereby the pass-through openings 22, 25 and 26 can be brought into mutual alignment such that a free passage is procured for the shank 41, which can pass through them. In this way, the tightening element 40 can be forced into the female fastening element 20 or pulled out of it without any significant resistance.

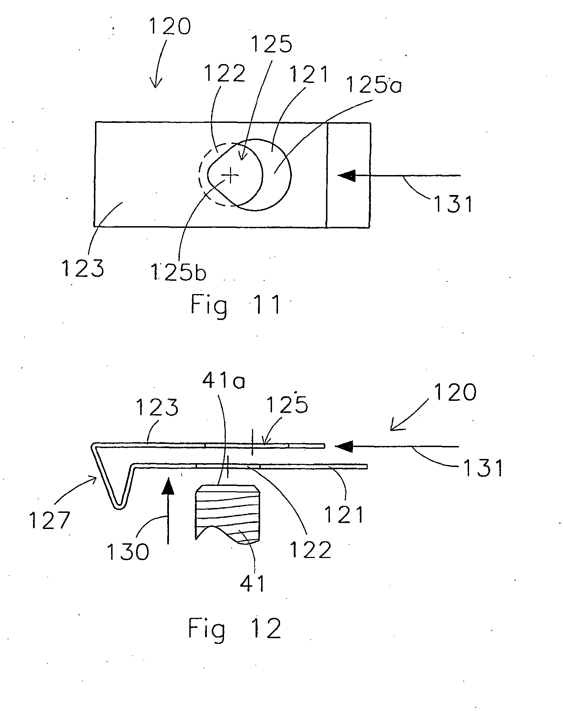

An embodiment is conceivable in which the spring force of the hinged parts is chosen such that the shank 41 can be forced through the openings without displacing the clamping plate relative to the base plate. In order to remove the tightening element 40, the clamping plates must then be displaced in order to bring the pass-through openings in the base plate and the clamping plate into line such that the shank can be withdrawn. An embodiment of this type is shown in Fig. 11 and Fig. 12.

Fig. 11 and Fig. 12 show in a top view and a side view, respectively, a female fastening element 120. The female fastening element 120 comprises a base plate 121 containing a pass-through opening 122. At a distance from the base plate 121, a clamping plate 123 extends substantially parallel to the base plate 121. The clamping plate 123 is provided with pass-through opening 125 having substantially a drip shape. The drip-shaped pass-through opening 125 has a wider portion 125a and a narrower portion 125b. The base plate 121 and the clamping plate 123 are connected to each other by means of a resilient hinged part 127. The resilient hinged part 127 is comparable with the resilient hinged part 27 described with reference to Figures 4-8. In theory, a differently realized resilient connection between the clamping plate and the base plate would also be possible. The narrower part 125b of the pass-through opening 125 in the clamping plate 123 is facing in the direction of the spring force. In the unloaded state, the pass-through opening 122 in the base plate 121 and the wider part 125a of the pass-through opening 125 in the clamping plate 123 are not mutually aligned.

In use, a shank 41 of a tightening element 40 can be fed through the pass-through opening 122 of the base plate 121, as is illustrated with the arrow 130 in Fig. 12. Next, the end face 41 a of the shank 41 will butt against the region around the narrower portion 125b of the drip-shaped pass-through opening 125 in the clamping plate 123, whereby the clamping plate 123 will be forced upwards and will bend and/or swivel around the hinged part 127. The wider portion 125a of the drip-shaped pass-through opening 125 thereby comes into line with the pass-through opening 122 in the base plate 121 and the shank 41 can pass through the two pass-through openings 122 and 125. By maintaining a sufficiently small distance between the base plate 121 and the clamping plate 123, the clamping plate 123 cannot deflect far enough the other way to allow the shank to be withdrawn from the clamping plate 123. In order to be able to withdraw the shank 41, the fitter can press the clamping plate 123 in the direction of the resilient hinged part 127 counter to the spring force, as is illustrated with the arrow 131 in Fig. 11 and Fig. 12. The pass-through opening 122 in the base plate 121 and the wider portion 125a of the pass-through opening 125 in the clamping plate 123 are thereby brought into line and the shank 41 is able to be withdrawn without any significant hindrance.

For the tightening element, a number of embodiments are conceivable. In Fig. 9, a preferred embodiment is shown, in which the tightening element 40 has a shank 41 and a head 42. The shank 41 is provided with a toothing or serrations, which can hook behind the rim of the pass-through openings 25, 26. In the illustrated preferred embodiment, the teeth have an angle of 45°. As a result of this shape, the shank 41 can be forced more easily through the pass-through openings 25, 26 in the mounting operation and yet a secure connection is ensured. As the tightening element, a screw could also be used. Other pin-shaped elements having a head and a shank, preferably provided with serrations or barbs, are also conceivable. In Fig. 10, two examples of such tightening elements are shown, in Fig. 10a a variant being shown having two sets articulately connected to each other and provided with barbs. In Fig. 10b, a variant is shown having a barbed shank of right-angled cross-section. It is noted that the term shank does not have to be interpreted restrictively and is not necessarily required to have a round cross section. It can have any suitable shape and, in the case of a part formed integrally onto the clip body, for example, would be a strip-shaped or lip-shaped member.

Instead of a loose tightening element as shown in the figures, it is also conceivable for a tightening element having a shank to be formed integrally onto the first end of the clip body. A tightening element can also be fixedly fitted to the first end of the clip body, for example by welding.

## Claims

1. Pipe clip (1) for fastening a pipe to a wall, ceiling or other support, comprising:
- a clip body (2) having an opening (6) for fitting the pipe clip around the pipe, which opening (6) is delimited by a first (11) and a second end (12) of the clip body,
- a tightening element (40), which is connected to the first end (11) of the clip (1), engaging on the first end (11) of the clip body and comprising a shank (41),
- a female fastening element (20, 120), which is fitted on the second end (12) of the clip body and into which the shank (41) of the tightening element (40) is insertable, wherein the female fastening element (20; 120) comprises a base plate (21; 121) having a pass-through opening (22; 122) having a rim , as well as at least one clamping plate (23, 24;123), which extends at a distance from the base plate (21; 121) and which is provided with a pass-through opening (25, 26; 125) having a rim ,
**characterized in that** said clamping plate (23, 24; 123) is connected to the base plate (21; 121) by means of a resilient hinged part (27, 28; 127),
**in that** in an unloaded state, in which the shank of the tightening element is not inserted in the pass-through openings in the base plate (21; 121) and the clamping plate (23, 24; 123), said pass-through openings are partially overlapping each other,
**in that** the clamping plate (23, 24; 123) is movable counter to the spring force of the resilient hinged part in order to bring the pass-through openings (22, 25, 26; 122, 125) into line with each other such that the shank (41) can pass through them, and
**in that**, when the shank of the tightening element is inserted in said pass-through openings and the clamping plate is released, the clamping plate moves back by the spring force of the resiliently hinged part until the rim of its pass-through opening acts upon the shank of tightening element.

2. Pipe clip according to claim 1, wherein the base plate (21; 121) and the clamping plate (23, 24; 123) extend substantially parallel to each other.

3. Pipe clip according to claim 2, wherein the clamping plate (23, 24; 123) is movable substantially parallel to the base plate (21; 121).

4. Pipe clip according to one of the preceding claims, wherein the female fastening element (20) comprises two parallel clamping plates (23, 24), which are each connected to the base plate (21) by means of a resilient hinged part (27, 28) and are movable in opposite direction counter to the spring force of the respective resilient hinged parts (27, 28).

5. Pipe clip according to one of the preceding claims, wherein the pass-through opening (25, 26; 125) in the clamping plate (23, 24, 123) has a wide portion and a narrower portion, the shank (41) being able to pass through the wider portion of the pass-through opening (25, 26, 125).

6. Pipe clip according to claim 5, wherein the narrower part of the pass-through opening (25, 26; 125) is directed away from the direction of the spring force.

7. Pipe clip according to claim 5, wherein the narrower part of the pass-through opening (25, 26; 125) is directed in the direction of the spring force.

8. Pipe clip according to one of claims 5-7, wherein the pass-through opening (25, 26; 125) is substantially drip-shaped.

9. Pipe clip according to one of the preceding claims, wherein the resilient hinged part (27, 28; 127) comprises two mutually connected legs (27a, 27b, 28a, 28b) extending at an angle, one leg (27a, 28a) being connected to the base plate (21; 121) and the other leg (27b, 28b) to the clamping plate (23, 24; 123).

10. Pipe clip according to claim 9, wherein the leg (27a, 28a) which is connected to the base plate (21; 121) extends in a transverse direction relative to the base plate (21; 121).

11. Pipe clip according to claim 10, wherein the leg (27a, 28a) which is connected to the base plate (21; 121) extends at an angle of at least 80° relative to the base plate (21; 121).

12. Pipe clip according to claim 10, wherein the leg (27a, 28a) which is connected to the base plate (21; 121) extends at an angle of at least 90° relative to the base plate (21; 121), preferably between 90° and 135°.

13. Pipe clip according to one of claims 9-12, wherein the legs (27a, 27b, 28a, 28b) of the hinged part (27, 28; 127) enclose an acute angle (β), preferably of 0°- 45°.

14. Pipe clip according to one of the preceding claims, wherein the base plate (21; 121), the resilient hinged part (27, 28; 127) and the clamping plate (23, 24; 123) of the female fastening part (20; 120) are made in one piece.

15. Pipe clip according to claim 14, wherein the female fastening (20; 120) element is made of metal, preferably spring steel.

16. Pipe clip according to claim 14, wherein the female fastening element is made of plastic.

17. Pipe clip according to claim 14, wherein the female fastening element is made of a combination of metal and plastic.

18. Pipe clip according to one of the preceding claims, wherein the base plate (21; 121) of the female fastening element (20; 120) is connected to the end of the pipe clip body.

19. Pipe clip according to one of the preceding claims, wherein a flange (14) is provided at the second end (12) of the clip body, to which flange (14) the female fastening element (20) is fitted.

20. Pipe clip according to claim 19, wherein the base plate (21) of the female fastening element (20) is located on the side of the flange (14) which is facing towards the first end (11) of the clip body.

21. Pipe clip according to claim 19 or 20, wherein the clamping plate (23, 24) is located on the side of the flange (14) which is facing away from the first end (11) of the clip body.

22. Pipe clip according to claim 20 or 21, wherein the base plate (21) of the female fastening element (20) bears against the flange (14).

23. Pipe clip according to claim 22, wherein the distance between the clamping plate (23) situated closest to the flange (14) and the base plate (21) approximately conforms to the thickness of the flange (14).

24. Pipe clip according to claim 22 or 23, wherein the flange (14) or the base plate (21) is provided with one or more recesses, and the base plate (21) or the flange (14) is provided with one or more bulges (29), which are accommodated in the recesses.

25. Pipe clip according to one of the preceding claims, wherein the shank (41) of the tightening element (40) is provided with an external screw thread, serrations, toothings, barbs or the like.

26. Pipe clip according to one of the preceding claims, wherein the tightening element (40) has a head (42) and a shank (41), wherein the head (42) engages on the first end (11) of the clip body.

27. Pipe clip according to one of claims 1-26, wherein the tightening element (40) is fixedly connected to the first end (11) of the clip body.

## Patentansprüche

1. Rohrschelle (1) zum Befestigen eines Rohrs an einer Wand, Decke oder anderes Tragwerk, umfassend:
- einen Schellenkörper (2) mit einer Öffnung (6) zum Montieren der Rohrschelle um das Rohr, welche Öffnung (6) durch ein erstes (11) und eine zweites (12) Ende des Schellenkörpers begrenzt ist,
- ein Anziehelement (40), das mit dem ersten Ende (11) der Schelle (1) verbunden ist, am ersten Ende (11) des Schellenkörpers angreift und einen Schaft (41) aufweist,
- ein weibliches Befestigungselement (20; 120), das am zweiten Ende (12) des Schellenkörpers montiert ist, und in das der Schaft (41) des Anziehelements (40) eingesteckt werden kann, wobei das weibliche Befestigungselement (20; 120) eine Grundplatte (21; 121) mit einer Durchgangsöffnung (22; 122) mit einem Rand, sowie mindestens eine Klemmplatte (23, 24; 123) aufweist, die sich in einem Abstand von der Grundplatte (21; 121) erstreckt und mit einer Durchgangsöffnung (25, 26; 125) mit einem Rand versehen ist,
**dadurch gekennzeichnet, dass** die Klemmplatte (23, 24; 123) mittels eines federnden, gelenkigen Teils (27, 28; 127) mit der Grundplatte (21; 121) verbunden ist,
dass in einem unbelasteten Zustand, in dem der Schaft des Anziehelements nicht in die Durchgangsöffnungen in der Grundplatte (21; 121) und der Klemmplatte (23, 24; 123) eingesteckt ist, die Durchgangsöffnungen einander teilweise überlappen,
dass die Klemmplatte (23, 24; 123) entgegen der Federkraft des federnden, gelenkigen Teils bewegt werden kann, um die Durchgangsöffnungen (22, 25, 26; 122, 125) miteinander so in Übereinstimmung zu bringen, dass der Schaft (41) durch sie hindurchtreten kann, und
dass, wenn der Schaft des Anziehelements in die Durchgangsöffnungen eingesteckt und die Klemmplatte gelöst ist, sich die Klemmplatte durch die Federkraft des federnd gelenkigen Teils zurückbewegt, bis der Rand ihrer Durchgangsöffnung auf den Schaft des Anziehelements wirkt.

2. Rohrschelle nach Anspruch 1, wobei sich die Grundplatte (21; 121) und die Klemmplatte (23, 24; 123) im Wesentlichen parallel zueinander erstrecken.

3. Rohrschelle nach Anspruch 2, wobei die Klemmplatte (23, 24; 123) zur Grundplatte (21; 121) im Wesentlichen parallel bewegbar ist.

4. Rohrschelle nach einem der vorhergehenden Ansprüche, wobei das weibliche Befestigungselement (20) zwei parallele Klemmplatten (23, 24) aufweist, die jeweils mittels eines federnden, gelenkigen Teils (27, 28) mit der Grundplatte (21) verbunden und entgegen der Federkraft des jeweiligen federnden, gelenkigen Teils (27, 28) in entgegengesetzter Richtung bewegbar sind.

5. Rohrschelle nach einem der vorhergehenden Ansprüche, wobei die Durchgangsöffnung (25, 26; 125) in der Klemmplatte (23, 24, 123) einen breiten und einen schmäleren Abschnitt hat, wobei der Schaft (41) durch den breiteren Abschnitt der Durchgangsöffnung (25, 26, 125) hindurchtreten kann.

6. Rohrschelle nach Anspruch 5, wobei der schmälere Abschnitt der Durchgangsöffnung (25, 26; 125) von der Richtung der Federkraft weg gerichtet ist.

7. Rohrschelle nach Anspruch 5, wobei der schmälere Abschnitt der Durchgangsöffnung (25, 26; 125) in die Richtung der Federkraft gerichtet ist.

8. Rohrschelle nach einem der Ansprüche 5 bis 7, wobei die Durchgangsöffnung (25, 26; 125) im Wesentlichen tropfenförmig ist.

9. Rohrschelle nach einem der vorhergehenden Ansprüche, wobei das federnde, gelenkige Teil (27, 28; 127) zwei miteinander verbundene Schenkel (27a, 27b, 28a, 28b) aufweist, die sich in einem Winkel erstrecken, wobei ein Schenkel (27a, 28a) mit der Grundplatte (21; 121) und der andere Schenkel (27b, 28b) mit der Klemmplatte (23, 24; 123) verbunden ist.

10. Rohrschelle nach Anspruch 9, wobei der Schenkel (27a, 28a), der mit der Grundplatte (21; 121) verbunden ist, sich in Bezug auf die Grundplatte (21; 121) in einer Querrichtung erstreckt.

11. Rohrschelle nach Anspruch 10, wobei der Schenkel (27a, 28a), der mit der Grundplatte (21; 121) verbunden ist, sich in einem Winkel von mindestens 80° in Bezug auf die Grundplatte (21; 121) erstreckt.

12. Rohrschelle nach Anspruch 10, wobei der Schenkel (27a, 28a), der mit der Grundplatte (21; 121) verbunden ist, sich in einem Winkel von mindestens 90°, vorzugsweise zwischen 90° und 135°, in Bezug auf die Grundplatte (21; 121) erstreckt.

13. Rohrschelle nach einem der Ansprüche 9 bis 12, wobei die Schenkel (27a, 27b, 28a, 28b) des gelenkigen Teils (27, 28; 127) einen spitzen Winkel (β) von vorzugsweise 0 bis 45° einschließen.

14. Rohrschelle nach einem der vorhergehenden Ansprüche, wobei die Grundplatte (21; 121), das federnde gelenkige Teil (27, 28; 127) und die Klemmplatte (23, 24; 123) des weiblichen Befestigungselements (20; 120) in einem Stück hergestellt sind.

15. Rohrschelle nach Anspruch 14, wobei das weibliche Befestigungselement (20; 120) aus Metall, vorzugsweise Federstahl, hergestellt ist.

16. Rohrschelle nach Anspruch 14, wobei das weibliche Befestigungselement aus Kunststoff hergestellt ist.

17. Rohrschelle nach Anspruch 14, wobei das weibliche Befestigungselement aus einer Kombination von Metall und Kunststoff hergestellt ist.

18. Rohrschelle nach einem der vorhergehenden Ansprüche, wobei die Grundplatte (21; 121) des weiblichen Befestigungselements (20; 120) mit dem Ende des Rohrschellenkörpers verbunden ist.

19. Rohrschelle nach einem der vorhergehenden Ansprüche, wobei ein Flansch (14) am zweiten Ende (12) des Schellenkörpers vorgesehen ist, an welchem Flansch (14) das weibliche Befestigungselement (20) montiert ist.

20. Rohrschelle nach Anspruch 19, wobei sich die Grundplatte (21) des weiblichen Befestigungselements (20) auf der Seite des Flanschs (14) befindet, die dem ersten Ende (11) des Schellenkörpers zugewandt ist.

21. Rohrschelle nach Anspruch 19 oder 20, wobei sich die Klemmplatte (23, 24) auf der Seite des Flanschs (14) befindet, die dem ersten Ende (11) des Schellenkörpers abgewandt ist.

22. Rohrschelle nach Anspruch 20 oder 21, wobei die Grundplatte (21) des weiblichen Befestigungselements (20) am Flansch (14) anliegt.

23. Rohrschelle nach Anspruch 22, wobei der Abstand zwischen der sich dem Flansch (14) am nächsten befindenden Klemmplatte (23) und der Grundplatte (21) in etwa der Dicke des Flansches (14) entspricht.

24. Rohrschelle nach Anspruch 22 oder 23, wobei der Flansch (14) oder die Grundplatte (21) mit einer oder mehreren Ausnehmung/en versehen ist, und die Grundplatte (21) oder der Flansch (14) mit einem Vorsprung oder mehreren Vorsprüngen (29) versehen ist, die in den Ausnehmungen aufgenommen sind.

25. Rohrschelle nach einem der vorhergehenden Ansprüche, wobei der Schaft (41) des Anziehelements (40) mit einem Außenschraubengewinde, Kerbungen, Zahnungen, Widerhaken o. dgl. versehen ist.

26. Rohrschelle nach einem der vorhergehenden Ansprüche, wobei das Anziehelement (40) einen Kopf (42) und einen Schaft (41) hat, wobei der Kopf (42) am ersten Ende (11) des Schellenkörpers angreift.

27. Rohrschelle nach einem der Ansprüche 1 bis 26, wobei das Anziehelement (40) fest mit dem ersten Ende (11) des Schellenkörpers verbunden ist.

## Revendications

1. Collier de fixation pour tuyau (1) permettant de fixer un tuyau à un mur, un plafond ou un autre support, comprenant :
- un corps de collier (2) présentant une ouverture (6) pour monter le collier de serrage autour de la conduite, laquelle ouverture (6) est délimitée par une première (11) et une seconde extrémité (12) du corps de collier,
- un élément de serrage (40), qui est relié à la première extrémité (11) du collier (1), venant en prise sur la première extrémité (11) du corps de collier et comportant une tige (41),
- un élément de fixation femelle (20, 120), qui est monté sur la seconde extrémité (12) du corps de collier et dans lequel la tige (41) de l'élément de serrage (40) peut être insérée,
dans lequel l'élément de fixation femelle (20 ; 120) comprend une plaque de base (21 ; 121) ayant une ouverture de passage (22 ; 122) comportant un rebord, ainsi qu'au moins une plaque de serrage (23, 24 ; 123), qui s'étend à une certaine distance de la plaque de base (21 ; 121) et qui est pourvue d'une ouverture de passage (25, 26 ; 125) ayant un rebord,
**caractérisé en ce que** ladite plaque de serrage (23, 24 ; 123) est reliée à la plaque de base (21 ; 121) au moyen d'une partie articulée élastique (27, 28 ; 127),
**en ce que** dans un état non chargé, dans lequel la tige de l'élément de serrage n'est pas insérée dans les ouvertures de passage dans la plaque de base (21 ; 121) et la plaque de serrage (23, 24 ; 123), lesdites ouvertures de passage se recouvrent partiellement les unes les autres,
**en ce que** la plaque de serrage (23, 24 ; 123) est mobile contre la force de ressort de la partie articulée élastique afin d'amener les ouvertures de passage (22, 25, 26 ; 122, 125) en ligne les unes avec les autres de façon à ce que la tige (41) puisse passer à travers elles, et
**en ce que**, lorsque la tige de l'élément de serrage est insérée dans lesdites ouvertures de passage et la plaque de serrage est relâchée, la plaque de serrage se déplace en arrière au moyen de la force de ressort de la partie articulée de manière élastique jusqu'à ce que le rebord de ses ouvertures de passage agissent sur la tige de l'élément de serrage.

2. Collier de serrage selon la revendication 1, dans lequel la plaque de base (21 ; 121) et la plaque de serrage (23, 24 ; 123) s'étendent sensiblement parallèlement l'une par rapport à l'autre.

3. Collier de serrage selon la revendication 2, dans lequel la plaque de serrage (23, 24 ; 123) est mobile sensiblement parallèlement à la plaque de base (21 ; 121).

4. Collier de serrage selon l'une quelconque des revendications précédentes, dans lequel l'élément de fixation femelle (20) comprend deux plaques de serrage parallèles (23, 24), qui sont reliées chacune à la plaque de base (21) au moyen d'une partie élastique articulée (27, 28) et sont mobiles en direction contraire, contre la force de ressort des parties articulées élastiques respectives (27, 28).

5. Collier de serrage selon l'une quelconque des revendications précédentes, dans lequel l'ouverture de passage (25, 26 ; 125) dans la plaque de serrage (23, 24, 123) présente une partie large et une partie plus étroite, la tige (41) étant apte à passer au travers de la partie plus large de l'ouverture de passage (25, 26, 125).

6. Collier de serrage selon la revendication 5, dans lequel la partie plus étroite de l'ouverture de passage (25, 26 ; 125) est dirigée à l'opposé de la direction de la force de ressort.

7. Collier de serrage selon la revendication 5, dans lequel la partie plus étroite de l'ouverture de passage (25, 26 ; 125) est dirigée dans la direction de la force de ressort.

8. Collier de serrage selon l'une quelconque des revendications 5 à 7, dans lequel l'ouverture de passage (25, 26 ; 125) est sensiblement en forme de goutte.

9. Collier de serrage selon l'une quelconque des revendications précédentes, dans lequel la partie articulée élastique (27, 28 ; 127) comprend deux pattes reliées entre elles (27a, 27b, 28a, 28b) s'étendant selon un certain angle, une patte (27a, 28a) étant reliée à la plaque de base (21 ; 121) et l'autre patte (27b, 28b) à la plaque de serrage (23, 24 ; 123).

10. Collier de serrage selon la revendication 9, dans lequel la patte (27a, 28a) qui est reliée à la plaque de base (21 ; 121) s'étend dans une direction transversale par rapport à la plaque de base (21 ; 121).

11. Collier de serrage selon la revendication 10, dans lequel la patte (27a, 28a) qui est reliée à la plaque de base (21 ; 121) s'étend selon un angle d'au moins 80° par rapport à la plaque de base (21 ; 121).

12. Collier de serrage selon la revendication 10, dans lequel la patte (27a, 28a) qui est reliée à la plaque de base (21 ; 121) s'étend selon un angle d'au moins 90° par rapport à la plaque de base (21 ; 121), de préférence selon un angle compris entre 90° et 135°.

13. Collier de serrage selon l'une quelconque des revendications 9 à 12, dans lequel les pattes (27a, 27b, 28a, 28b) de la partie articulée (27, 28 ; 127), forment un angle aigu (β), de préférence de 0° à 45°.

14. Collier de serrage selon l'une quelconque des revendications précédentes, dans lequel la plaque de base (21 ; 121), la partie articulée élastique (27, 28 ; 127) et la plaque de serrage (23, 24 ; 123) de la partie de fixation femelle (20 ; 120) sont réalisées en une seule pièce.

15. Collier de serrage selon la revendication 14, dans lequel l'élément de fixation femelle (20 ; 120) est réalisé en métal, de préférence en acier à ressort.

16. Collier de serrage selon la revendication 14, dans lequel l'élément de fixation femelle est réalisé en matière plastique.

17. Collier de serrage selon la revendication 14, dans lequel l'élément de fixation femelle est réalisé en une combinaison de métal et de plastique.

18. Collier de serrage selon l'une quelconque des revendications précédentes, dans lequel la plaque de base (21 ; 121) de l'élément de fixation femelle (20 ; 120) est reliée à l'extrémité du corps de collier de serrage.

19. Collier de serrage selon l'une quelconque des revendications précédentes, dans lequel une bride (14) est prévue au niveau de la deuxième extrémité (12) du corps de collier, bride (14) à laquelle l'élément de fixation femelle (20) est fixé.

20. Collier de serrage selon la revendication 19, dans lequel la plaque de base (21) de l'élément de fixation femelle (20) est située sur le côté de la bride (14) qui est tourné vers la première extrémité (11) du corps de collier.

21. Collier de serrage selon la revendication 19 ou 20, dans lequel la plaque de serrage (23, 24) est située sur le côté de la bride (14) qui est opposé à la première extrémité (11) du corps de collier.

22. Collier de serrage selon la revendication 20 ou 21, dans lequel la plaque de base (21) de l'élément de fixation femelle (20) est en appui contre la bride (14).

23. Collier de serrage selon la revendication 22, dans lequel la distance entre la plaque de serrage (23) située le plus près de la bride (14) et la plaque de base (21) s'adapte approximativement à l'épaisseur de la bride (14).

24. Collier de serrage selon la revendication 22 ou 23, dans lequel la bride (14) ou la plaque de base (21) est pourvue d'un ou plusieurs renfoncements, et la plaque de base (21) ou la bride (14) est pourvue d'un ou plusieurs renflements (29), qui se logent dans les renfoncements.

25. Collier de serrage selon l'une quelconque des revendications précédentes, dans lequel la tige (41) de l'élément de serrage (40) est pourvue d'un filetage de vis extérieur, de dentelures, de dentures, de picots ou analogue.

26. Collier de serrage selon l'une quelconque des revendications précédentes, dans lequel l'élément de serrage (40) a une tête (42) et une tige (41), dans lequel la tête (42) vient en prise sur la première extrémité (11) du corps de collier.

27. Collier de serrage selon l'une quelconque des revendications 1 à 26, dans lequel l'élément de serrage (40) est relié de manière fixe à la première extrémité (11) du corps de collier.
